# EUROPEAN PATENT SPECIFICATION

(11) **EP 0 706 475 B1**
(45) Date of publication and mention of the grant of the patent: **19.08.1998**
(21) Application number: 94921143.7
(22) Date of filing: 30.06.1994
(51) Int. Cl.: B65B 21/18, B65G 47/90

(54) **A BOTTLE-GRIPPING DEVICE**
GREIFVORRICHTUNG FÜR FLASCHEN
DISPOSITIF DE PREHENSIION DE BOUTEILLES

(30) Priority: 08.07.1993 SE 9302370
(43) Date of publication of application: 17.04.1996
(73) Proprietor: TRYGG, Lars, Erik, S-374 24 Karlshamn (SE)
(72) Inventor: TRYGG, Lars, Erik, S-374 24 Karlshamn (SE)
(74) Representative: Axelsson, Rolf
(86) International application number: SE9400650
(87) International publication number: WO9501908

(56) References cited:
- WO-A-82/02871
- WO-A-89/04794
- GB-A- 877 099

## Description

The present invention relates to a bottle gripper of the kind which includes a plurality of penetrating channels disposed in a bottle-gripper head, wherein the channels include therein gripping devices which function to hold temporarily the heads of bottles inserted into the channels.

Bottle grippers of this general kind are used in breweries, among other places, for transferring full bottles from conveyor belts to distribution crates and to transfer empty bottles from crates to conveyor belts. Each bottle-gripper head is normally adapted to grip a number of bottles corresponding to a full crate. Several such heads may be arranged in a bottle-handling machine which is colon to all of the heads. Advantageous embodiments of this kind of bottle gripper are described in WO-A-8 202 871 and WO-A-8 904 794. Also commercially available are bottle grippers in which the gripping devices are mounted in cavities in a bottle-gripper head, instead of in through-penetrating channels.

Certain problems can arise when using conventional bottle grippers for handling the very light plastic bottles that have developed in recent years. When the bottles are lifted with the aid of gripping devices mounted in cavities or channels in the gripper head, problems can occur in achieving complete release of the bottle head from the gripping device as the device opens. This may be due to foreign substances fastening between the bottle head and the gripping device and therewith preventing release of the bottle, the fit between bottle head and gripping device being a relatively tight fit. In the case of empty plastic bottles, the lightness of the bottle also contributes to the problem of achieving positive release of the bottle, which is not the case with the much heavier glass bottles. Because the bottle-filling rate may be as high as 30-40,000 bottles per hour, it is necessary in present times to manually gather plastic bottles and superintend automatic bottle grippers and remove manually those bottles that have fastened in the grippers.

It has been proposed that this problem can be solved in those commercially available bottle-gripper heads in which the gripping devices are mounted in non-penetrating channels by fitting each channel with a spring-operated ejector plate, see for example GB-A-877099. When such a gripping head is lowered down over a number of bottles, the bottle heads engage respective ejector plates and press the plates inwards against the action of associated springs. When the gripping devices are opened after transfer of the bottles between stations has been completed, the bottles are urged from their respective cavities by means of the springs. However, this solution to the aforesaid problem has certain drawbacks.

Firstly, it is necessary to be able to press tile gripper head down over the bottle heads with a relatively heavy force, since a large number of springs are to be compressed. This force also increases progressively with the distance through which the gripper head is pressed down. However, the bottle-gripping heads are conventionally mounted in associated lifting devices so as to be influenced solely by their own weight when lowering the heads over the bottle heads. This weight, however, is not sufficient to compress a large number of springs, and consequently it is necessary to restructure the machine. In the case of a conventional machine, the lifting arrangement may be provided with gripping heads which are each intended for 24 bottles, which means that six such heads require 144 springs to be compressed. This requires the application of a considerable force for which this type of machine is normally not constructed, if each spring is to be able to exert any appreciable ejection force. Although only one bottle will normally fasten in a gripper head, it is still necessary to dimension all springs to provide the force required in each individual case.

Another problem with such arrangements resides in the functional disturbances that often occur as a result of such residues as suction pipes, foils, capsules, etc., pressed into the grippers by the bottles and preventing the grippers and the ejector plates from working.

In the case of bottle grippers of the kind that have through-penetrating channels, which are not sensitive to functional disturbances of the aforesaid kind since the channels become self-cleaning, the main object of the present invention is to generate in each channel an ejection force which does not require the pre-compression of springs or restructuring of the machine.

The invention is based on the realization that this can be achieved by allowing the bottle in each channel to be activated by a weight arranged in the channel and functioning to force the bottle from the channel when the associated gripping device is opened. Suitable construction will enable the weights in a number of channels or in all channels to mutually cooperate in forcing an individual bottle from a channel in which the bottle has fastened.

The characteristic features of a bottle gripper in accordance with the present invention are disclosed in claim 1.

A bottle gripper of this design can be lowered conventionally over a number of bottles without needing to exert any additional down-pressing force, wherein each weight will rest on its respective bottle head and therewith be lifted upwards in its respective channel, to some extent. When bottle transfer has been completed and the gripper head is then opened, the weights will hold the bottles pressed down against the underlying supporting surface during the first movement of the bottle gripper upwards until the head of the bottle has left the gripping device. The bottle-gripper heads can therewith be suspended from earlier used lifting devices, since it is not necessary to exert a down-pressing force thereon.

The weights in a number of channels will preferably be mutually connected through the medium of connecting means which extend on the upper side of the bottle-gripper head and which restrict movement of the weights in the bottle outfeed direction, but which allow the weights to move freely in the opposite direction. By giving the connection means the form of relatively rigid rods or plates, several of the weights may act in unison to dislodge one or more bottles that have fastened in the gripper head.

The weights may conveniently have the form of rods so as to enable them to be guided in respective channels, these rods being fitted relatively loosely in respective channels so as to avoid jamming of the rods and so as to enable the aforesaid mutual cooperation to be achieved. The weights will suitably be connected rigidly to the connecting rods or plates.

Other features of the invention are made apparent in the following Claims.

The invention will now be described in more detail with reference to an exemplifying embodiment thereof and also with reference to the accompanying schematic drawings, in which
Fig. 1 is a perspective view of a bottle-gripper head which includes through-penetrating channels provided with bottle gripping devices;
Fig. 2 illustrates an ejector plate which includes weights in accordance with the present invention; and
Figs. 3 and 4 illustrates the working method of the plate shown in Fig. 2 when handling plastic bottles.

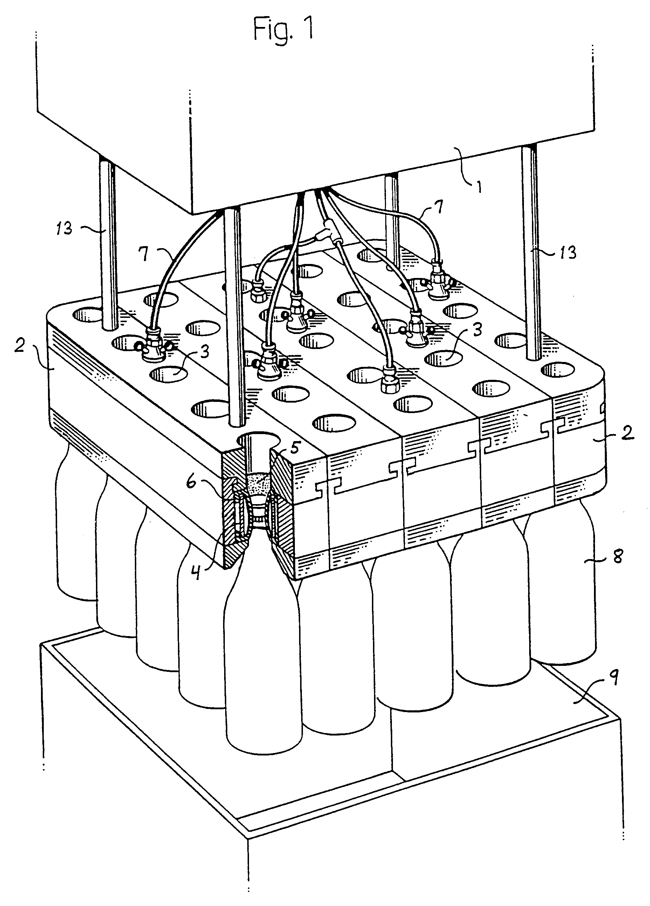

The bottle-gripper head illustrated in Fig. 1 is of the kind described in more detail in the aforesaid WO-A-8 904 794 and will not therefore be described in detail here. The gripper head includes a carrier device 1 which carries a plurality of mutually connected blocks 2 which include through-penetrating channels 3, wherein the channels 3 have mounted therein gripping devices of the kind described in more detail in WO-A-8 202 871. Each of these gripping devices includes a rubber cuff 5 provided on a perforated support sleeve 4 and having flanges 6 which grip around the two end-edges of the sleeve. The flanges 6 fit tightly into the channels 3 and have an oblique activating surface which cause the flanges 6 of the rubber cuffs 5 to press harder against the channel wall as compressed-air is delivered to the space between respective channel walls and sleeves, this pressure increasing with increasing air pressures. The gripping devices are thus self-holding in respective channels.

The rubber cuff 5 is shown in an activated state in the Figure, i.e. the rubber cuff is pressed outwards by means of compressed air delivered through hoses or pipes 7, into locking engagement around the head of respective bottles 8, so as to enable the bottles to be lifted from a crate 9, for instance.

When the bottles are to be released, the pressures on both sides of the rubber cuff are equalized and the cuff will therewith return to a form in which the bottle head is released. In the case of light plastic bottles, however, problems can occur as a result of the tight fit between the bottle head and the form taken by the rubber cuff in its inactive or rest state, especially if foreign material has fastened between the bottle head and the cuff such as to prevent release of the bottle head. Because empty plastic bottles are very light in weight, no appreciable assistance is obtained through the weight of the bottle.

According to the present invention, this problem is solved by providing in each channel 3 a movable weight which rests against the head of a respective bottle such as to exert an ejection force thereon in conjunction with disengagement of the gripping device with the bottle head.

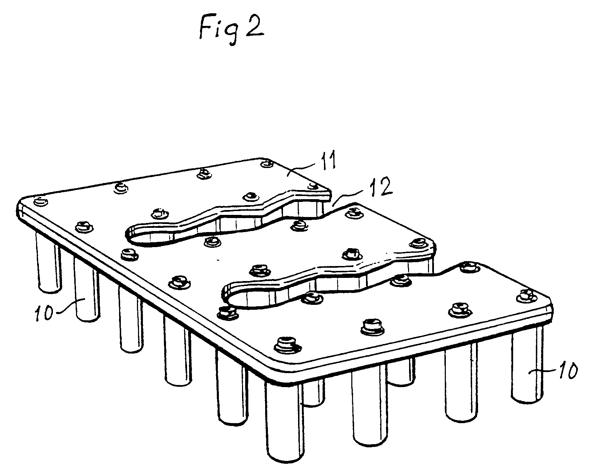

Fig. 2 illustrates an embodiment of an arrangement used in accordance with the invention, this arrangement comprising a plurality of rod-shaped weights 10 which, in the illustrated case, are carried by a common, relatively rigid carrier plate 11. The weights 10 are positioned with the same pitch as the channels 3 in the bottle-gripper head used. The weights are also preferably rigidly connected to the plate 11. The plate is provided with necessary slots 12 for receiving rods 13 which carry the bottle-gripper head, and necessary air delivery lines.

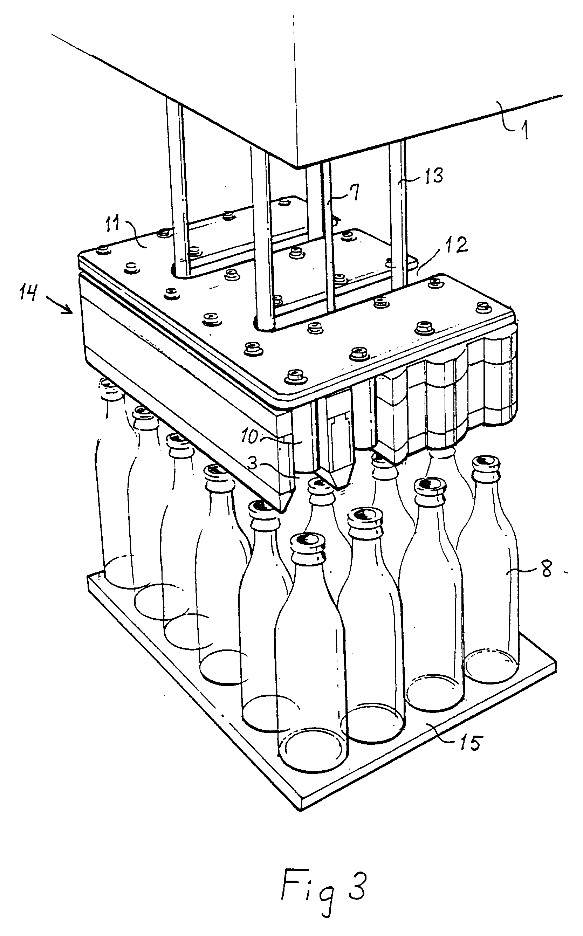

Fig. 3 shows the arrangement of Fig. 2 fitted to a schematically illustrated bottle-gripper head 14, such that one weight 10 protrudes down into each channel 3 in the head. In this case, the weights hang from the plate 11 resting on the upper side of the head 14. Fig. 3 shows the head 14 positioned for lowering over an array of bottles 8 which rest on a schematically illustrated support surface 15.

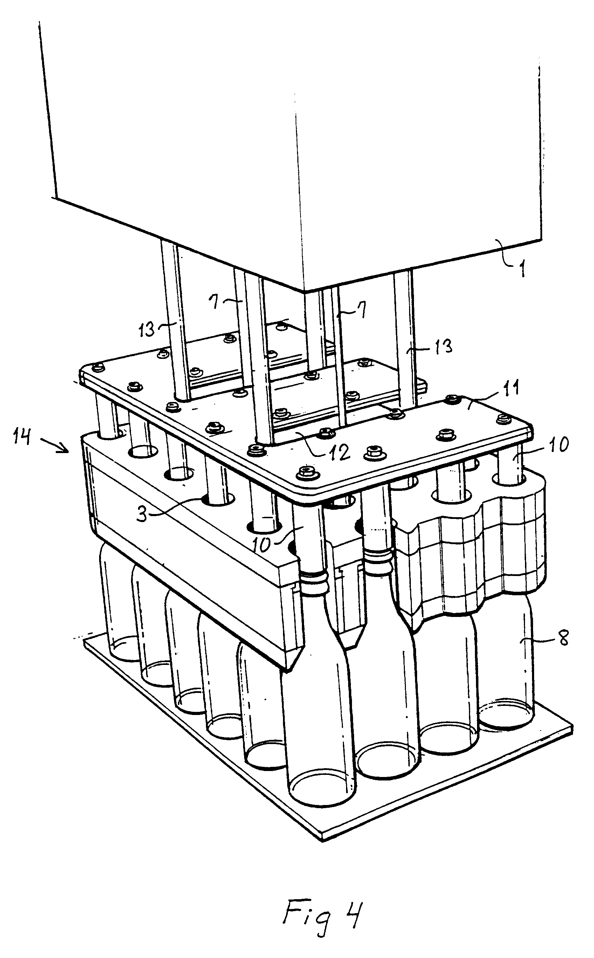

Fig. 4 shows the head 14 in a later stage, in which the head has been lowered over the bottles 8, so that the bottle heads project up into respective channels 3 in the gripper head and are gripped and held by the gripping devices provided therein. The bottle heads therewith lift the weights 10 and their plate 11 to the illustrated position, and the bottles are moved while hanging from respective gripping devices.

After having moved the bottles to a desired position, the bottle-gripper head 14 is lowered so as to rest the bottles 8 on an underlying support surface, for instance a conveyor belt. The bottle heads are then released from the gripping devices in the respective channels of the gripper head 14, and the head is then raised. The weights 10 will therewith remain on the heads of the bottles and hold the heads pressed downwardly while the gripper head 14 moves up towards the plate 11. When the head 14 has reach the plate 11, the gripping devices will have disengaged completely from the bottle heads and consequently there is no longer any danger of a bottle accompanying its respective gripper head. The weights 10 and the plate 11 are therewith moved back to the positions shown in Fig. 3 in preparation for the next working cycle.

As will be evident from the aforegoing, the weights exert an ejection force on the bottles when required, without requiring the gripper head 14 to exert an additional down-pressing force when moving the head down over the bottle heads.

The rod-shaped weights 10 are guided in the channels 3 in the gripper head, wherein the fit of the weights 10 in the channels is suitably such as to enable the weights and the plate to be positioned obliquely to some extent. This means, among other things, that when a single bottle has fastened in its associated gripping device, remaining weights will contribute in generating a downward-pressing force that acts on the fastened bottle. For instance, if one of the centrally located bottles should fasten, the total mass of all weights will act essentially on precisely this single bottle. The combined weights of other weights will also contribute to releasing a fastened bottle belonging to the laterally located bottles. Each rod-shaped element 10 has a weight of suitably between 150 and 300 grams, this weight depending on the total number of weights held together by a plate. Thus, a randomly located bottle will be subjected to an ejection force corresponding to a weight of 3-4 kg. The use of ejector springs for achieving the same effect would require the same force from each individual spring.

In the illustrated embodiment, all the weights of a complete gripper head have been mutually combined by means of one single plate 11. Alternatively, this plate can be divided into several sub-plates. This may be Particularly necessary when the gripper head is of the kind which is divided into different blocks which can be displaced relative to one another in order to adapt to the pitch or spacing between the bottles. As an alternative to the aforesaid plates, the weights may be joined together in some other way, for instance by means of rigid rods or like devices. The invention can be applied to all bottle grippers that include through-penetrating channels, irrespective of the precise design of respective gripping devices. The weights may also be disposed above the through-penetrating channels, and consequently the dimensions of the weights may be much smaller than the dimension of the cavity into which the bottle head shall be inserted. The expression ''a weight movably arranged in each channel, also includes the construction in which the actual weight is not located in the channel, but solely a rod or like device which transfers an ejector force from the weight onto the bottle.

## Claims

1. A bottle gripper comprising a bottle-gripper head (14), a plurality of through-penetrating channels (3) provided in the gripper head (14), and gripping devices (5, 7) mounted in respective channels and functioning to hold temporarily the heads of bottles inserted into said channels, ejector means (10) movably arranged in each channel (3) and intended to rest on the head of a bottle inserted into a respective channel and to exert an ejection force on said bottle (8) when an associated gripping device (5, 7) releases the bottle head, and means (11) provided for limiting movement of respective ejector means in the bottle ejection direction, **characterized** in that the ejector means (10) comprise weighted means freely movable in the direction opposite to the direction of ejection when resting on a bottle (8) inserted into the respective channel (3).

2. A bottle gripper according to Claim 1, **characterized** in that the weighted means (10) are mutually connected through the medium of connecting means (11) which extend along the upper side of the bottle-gripper head (14) and connect all or groups of weighted means and which limit the movement of the weights in the bottle ejection direction but which permit the weights to move freely in the opposite direction.

3. A bottle gripper according to Claim 2, **characterized** in that the connecting means have the form of relatively rigid rods or plates (11).

4. A bottle gripper according to Claim 3, **characterized** in that the weighted means (10) are rod-shaped and are intended to be guided in respective channels (3).

5. A bottle gripper according to Claim 4, **characterized** in that the rod-shaped means (10) fit relatively loosely in respective channels (3).

6. A bottle gripper according to any one of Claims 3-5, **characterized** in that the weighted means (10) are connected rigidly to the rods or plates (11) connecting said means (10).

7. A bottle gripper according to any one of Claims 3-6, **characterized** in that the bottle-gripper head (14) is provided with a plurality of mutually displaceable rows of bottle-gripping channels (3); and in that the weighted means (10) in the channels (3) of respective rows are connected by means of a rigid plate.

## Patentansprüche

1. Greifvorrichtung für Flaschen mit einem Flaschengreiferkopf (14), einer Vielzahl von durchgehenden Kanälen (3), die in dem Greiferkopf (14) ausgebildet sind, und Greifvorrichtungen (5, 7), die in entsprechenden Kanälen angeordnet sind und arbeiten, um zeitweilig die Köpfe von Flaschen halten, die in die Kanäle eingesetzt sind, bewegbar in jedem Kanal (3) angeordnete Auswerfereinrichtungen (10), die vorgesehen sind, um auf dem Kopf einer Flasche zu ruhen, die in einen entsprechenden Kanal eingesetzt ist und um eine Auswurfkraft auf die Flasche (8) auszuüben, wenn eine zugeordnete Greifvorrichtung (5, 7) den Flaschenkopf freigibt, und mit Einrichtungen (11), welche vorgesehen sind, um die Bewegung entsprechend der Auswerfereinrichtungen in Flaschenauswurfrichtung zu begrenzen,
**dadurch gekennzeichnet, daß**
die Auswerfereinrichtungen (10) Gewichteinrichtungen umfaßt, welche frei in der Richtung bewegbar sind, die der Auswurfrichtung entgegengesetzt ist, wenn sie auf einer Flasche (8) ruhen, die in den jeweiligen Kanal (3) eingesetzt ist.

2. Greifvorrichtung nach Anspruch 1, dadurch gekennzeichnet, daß die Gewichteinrichtungen (10) wechselseitig über Verbindungseinrichtungen (11) verbunden sind, die sich längs der oberen Seite des Flaschengreiferkopfes (14) erstrecken und alle oder Gruppen der Gewichteinrichtungen verbindet und die Bewegung der Gewichte in der Flaschenauswurfrichtung begrenzen, jedoch gestatten, daß sich die Gewichte in der entgegengesetzten Richtung frei bewegen.

3. Greifvorrichtung nach Anspruch 2, dadurch gekennzeichnet, daß die Verbindungseinrichtungen die Form relativ starrer Stangen oder Platten (11) aufweisen.

4. Greifvorrichtung nach Anspruch 3, dadurch gekennzeichnet, daß die Gewichteinrichtungen (10) stangenförmig sind und in entsprechenden Kanälen (3) zu führen sind.

5. Greifvorrichtung nach Anspruch 4, dadurch gekennzeichnet, daß die stangenförmigen Einrichtungen (10) relativ lose in die entsprechenden Kanäle (3) eingepaßt sind.

6. Greifvorrichtung nach einem der Ansprüche 3 bis 5, dadurch gekennzeichnet, daß die Gewichteinrichtungen (10) starr mit den Stangen oder Platten (11) verbunden sind, welche die Einrichtungen (10) verbinden.

7. Greifvorrichtung nach einem der Ansprüche 3 bis 6, dadurch gekennzeichnet, daß der Flaschengreiferkopf (14) mit einer Vielzahl von wechselseitig verschiebbaren Reihen von Flaschengreifkanälen (3) versehen ist und daß die Gewichteirrichtungen (10) in den Kanälen (3) der entsprechenden Reihen mit Hilfe einer starren Platte miteinander verbunden sind.

## Revendications

1. Appareil de saisie de bouteilles comprenant une tête (14) de saisie de bouteilles, plusieurs canaux traversants (3) formés dans la tête de saisie (14) et des dispositifs de saisie (5, 7) montés dans les canaux respectifs et assurant le maintien temporaire des têtes des bouteilles introduites dans les canaux, un dispositif éjecteur (10) disposé, afin qu'il soit mobile dans chaque canal (3) et destiné à être en appui sur la tête d'une bouteille introduite dans un canal respectif et à appliquer une force d'éjection sur la bouteille (8) lorsqu'un dispositif associé de saisie (5, 7) libère la tête de la bouteille, et un dispositif (11) destiné à limiter le déplacement du dispositif éjecteur respectif dans la direction d'éjection de la bouteille, caractérisé en ce que le dispositif éjecteur (10) comporte un dispositif lesté mobile librement en sens opposé au sens d'éjection lorsqu'il est en appui sur une bouteille (8) introduite dans le canal respectif (3).

2. Appareil de saisie de bouteilles selon la revendication 1, caractérisé en ce que les dispositifs lestés (10) sont raccordés mutuellement par un dispositif de raccordement (11) placé le long de la face supérieure de la tête de saisie de bouteilles (14) et qui raccorde la totalité ou des groupes de dispositifs lestés et limite le déplacement des poids dans la direction d'éjection des bouteilles tout en permettant un déplacement libre des poids dans le sens opposé.

3. Appareil de saisie de bouteilles selon la revendication 2, caractérisé en ce que le dispositif de raccordement est formé de tiges ou plaques relativement rigides (11).

4. Appareil de saisie de bouteilles selon la revendication 3, caractérisé en ce que les dispositifs lestés (10) ont une forme de tiges et sont destinés à être guidés dans les canaux respectifs (3).

5. Appareil de saisie de bouteilles selon la revendication 4, caractérisé en ce que le dispositif (10) en forme de tige s'ajuste avec un jeu relatif dans les canaux respectifs (3).

6. Appareil de saisie de bouteilles selon l'une quelconque des revendications 3 à 5, caractérisé en ce que les dispositifs lestés (10) sont raccordés rigidement aux tiges ou plaques (11) qui raccordent les dispositifs (10).

7. Appareil de saisie de bouteilles selon l'une quelconque des revendications 3 à 6, caractérisé en ce que la tête (14) de saisie de bouteilles a plusieurs rangées de canaux (3) de saisie de bouteilles mobiles les uns par rapport aux autres, et en ce que les dispositifs lestés (10) placés dans les canaux (3) des rangées respectives sont raccordés par une plaque rigide.
